# EUROPEAN PATENT APPLICATION

(11) **EP 2 275 996 A2**
(43) Date of publication of application: **19.01.2011**
(21) Application number: 10164564.6
(22) Date of filing: 01.06.2010
(51) Int. Cl.: G07B 15/00

(54) **Automatic payment system for access to an urban and/or extra-urban area for motor vehicles and control device for vehicles**

(30) Priority: 29.06.2009 ES 200930344
(71) Applicant: GMP Group, S.A., 2086 Luxembourg (LU)
(72) Inventor: Pelassa, Piergiorgio, 2086, Luxembourg (LU)
(74) Representative: Isern-Jara, Nuria

(57) **Abstract**

Automatic payment system for access to an urban and/or extra-urban area for motor vehicles, comprising a device (1) provided with at least one sensor (2) placed in each of the seats of the vehicle, a controlling unit (3) linked to the sensors for the reception of a signal informing of the presence or absence of a person sitting on the seat, and a data transmission unit (4) for sending the data captured by said sensors upon receiving an order from the external device (5), in such a way that when the vehicle enters an area, the payment facility of said area, which is adapted for communicating with the transmission unit (4) provided in the vehicle, receives a signal informing it of the number of passengers sitting inside the vehicle and subsequently the payment facility establishes a fee according to the number of passengers.

## Description

### OBJECT OF THE INVENTION

The object of the present patent application is to register a payment system for urban and/or extra-urban areas and a vehicle control device which has remarkable novelties and advantages.

### BACKGROUND OF THE INVENTION

For years, because of the increase in the number of cars in urban and extra-urban areas near densely populated areas, where car traffic flow on roads is reduced, the need still remains to find solutions for reducing the number of vehicles. One of the known solutions is the placement of tolls at the entrance of cities or in specific urban areas inside cities. However, these solutions do not take into account the expected number of occupants inside the vehicle. This can lead to user discrimination because a vehicle with five passengers implies a lower vehicle/person ratio than a vehicle occupied by a single person. Thus, the method intends both to reward those vehicles making good use of their capacity and to penalize those vehicles in which the number of passengers is lower than their full capacity.

The possibility exists in a manual-payment toll for the collector to determine by eye the number of passengers in a vehicle. However, this means the collector will need more time to accomplish each payment operation and consequently it could lead to a reduction of traffic flow on the road.

### DESCRIPTION OF THE INVENTION

This invention has been developed with an aim to provide a payment system which solves the abovementioned disadvantages, also providing other, added advantages which will become obvious from the following description herein.

Therefore it is an objective of this invention to provide an automatic payment system for access to an urban and extra-urban area for motor vehicles, such as a motorway, an expressway, a traffic-restricted urban area, **characterized in that** it comprises a device provided with at least one sensor placed in each seat of the vehicle, a controlling unit linked to the sensors for receiving the signal of presence or absence of a person sitting on the seat, and a data transmission unit for transmitting the data captured by said sensors upon receiving an order from an external device, in such a way that when the vehicle enters a payment area, the payment facility of said area, which is adapted for communicating with the transmission unit provided in the vehicle, receives a signal informing of the number of passengers sitting inside the vehicle and establishes a predetermined fee according to the number of passengers. The controlling unit can be placed in the inside of the vehicle or outside of the same, for example in the toll or payment facility.

Thanks to said features, toll payment can be made in a completely automatic, simple and effective way according to the number of passengers present in the vehicle without the need to inspect the vehicle by eye.

According to another aspect of the system of the invention, each seat or individual seat place defined on the seat itself in the vehicle comprises a sensor located in the backrest region and a second sensor located in the seat region. In this way, a correct detection is ensured of a passenger sitting on a seat. If there was a single sensor, an object placed on the seat could be sensed as a passenger and not as an object.

A second objective of the invention is to provide a control device for vehicles **characterized in that** it comprises a plurality of sensors located in the seats of the vehicle, a controlling unit linked to the sensors for interrogating the sensors about the number of occupants, and a data transmission unit for sending the data captured by the controlling unit to an external data capture device.

Advantageously, the sensor can include a movement discriminator, so that movements due, for example, to vibrations of the engine are not interpreted as the presence of a passenger inside the vehicle thus causingan incorrect order to be sent to the controlling unit.

Other features and advantages of the payment system which is the subject matter of this invention will become obvious from the description of a preferred, though non exclusive, embodiment, which is illustrated by means of a non limiting example in the attached drawings, in which:

### BRIEF DESCRIPTION OF THE DRAWINGS

Figure 1.- It is a view of a block diagram of the automatic payment system according to the present invention, and
Figure 2.- It is a schematic view of the arrangement of the system in a car vehicle.

### DESCRIPTION OF A PREFERRED EMBODIMENT

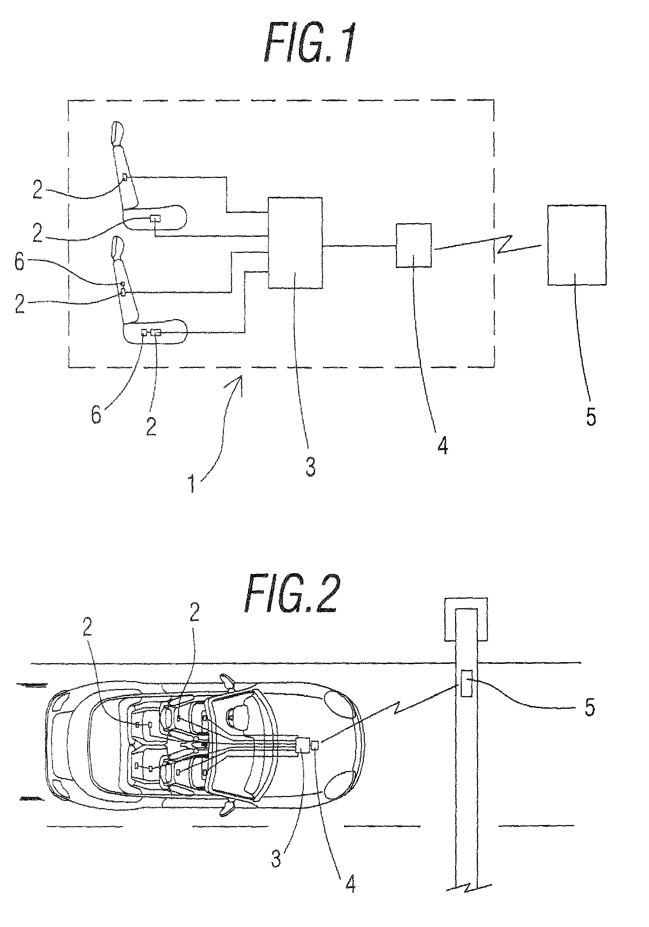

Referring to figures 1 and 2, the system of the invention for the automatic payment of fees for access to road areas for vehicles comprises a device indicated generally with the number 1, provided with sensors 2 detecting whether the seat has been occupied, located in each seat of the vehicle itself, a controlling unit 3 related to sensors for receiving the signal which indicates the presence or absence of a person sitting on the seat, and a data transmission unit 4 for sending the data captured by said sensors 2 upon receiving an order from the external device 5 belonging to the toll facility, for example aided by a radiofrequency antenna. The controlling unit 3 is made up of an electronic board located in a specific location of the vehicle or can be a part of the original electronic control unit of the vehicle itself.

Said sensors 2 are linked by electrical connections to the controlling unit 3, being arranged so that, in the front seats, for example of a car, they are placed within the interior of the backrest and inside the seat itself (bottom part of the seat), while in the back seats of a not shown embodiment for up to three people, three aligned sensors are arranged in the backrest and three sensors are aligned in the seats themselves each coinciding with the position of a passenger.

The sensors located in the backrest of the seat are located at an intermediate height, allowing detection of an occupant regardless of the occupant's stature.

Thus, when a vehicle enters an area with payment detection, the payment or toll facility of said area which is adapted for communicating with the transmission unit provided in the vehicle receives a signal informing it of the number of passengers seated inside the vehicle, said signal being sent to the external device 5 and establishing a fee previously determined according to the number of expected passengers in said vehicle. Said fee can include, for example, free access to a zone or road according to the number of passengers inside the vehicle.

The data transmission unit 4 can have different frequencies, each corresponding to a specific frequency of a different toll facility.

In order to prevent misinterpretation of signals sent by sensors 2, these incorporate a movements discriminator 6 of a known type capable of rejecting all those movements which could have been caused by slight vibrations, such as those from the engine when running, or from terrain irregularities.

In a not shown embodiment, the sensors can be placed in appropriate seat covers instead of being directly placed in the inside of the seat body, or by means of supports or adhesive elements appropriate for adhering to the seats, without this affecting the operation of the system.

The details, shapes, dimensions and other accessory elements, as well as the materials used in the manufacturing of the device of the invention can be conveniently replaced by other technical equivalents without departing from the spirit or scope of the invention as defined by the following claims.

## Claims

1. Automatic payment system for access to an urban and extra-urban area for motor vehicles, **characterized in that** it comprises a device (1) provided with at least a sensor (2) located in each seat of the vehicle, a controlling unit (3) linked to the sensors for receiving the signal of presence or absence of a person sitting on the seat and a data transmission unit (4) for transmitting the data captured by said sensors upon receiving an order from an external device (5),
in such a way that when the vehicle enters a payment area, the payment facility of said area, which is adapted for communicating with the data transmission unit (4) provided in the vehicle, receives a signal informing it of the number of passengers sitting inside the vehicle and subsequently the payment facility establishes a predetermined fee according to the number of passengers.

2. Payment system of claim 1, **characterized in that** each seat or individual seat place defined in the seat itself of the vehicle comprises a sensor (2) placed in the backrest region and a second sensor placed in the seat region.

3. Payment system of claim 1, **characterized in that** the controlling unit (3) is placed in the inside of the vehicle.

4. Payment system of claim 1, **characterized in that** the controlling unit (3) is placed outside the vehicle.

5. Control device for vehicles **characterized in that** it comprises a plurality of sensors placed in the seats of the vehicle, a controlling unit linked to the sensors for interrogating the sensors and a data transmission unit for sending the data captured by the controlling unit to an external data capture device.

6. Control device for vehicles of claim 5, **characterized in that** the sensor includes a movement discriminator (6).

7. Control device for vehicles of claim 5, **characterized in that** the sensors comprise an adhesive element for fixing to a seat of the vehicle.
